# EUROPÄISCHE PATENTANMELDUNG

(11) **EP 1 435 514 A2**
(43) Veröffentlichungstag der Anmeldung: **07.07.2004**
(21) Anmeldenummer: 03024570.8
(22) Anmeldetag: 28.10.2003
(51) Int. Cl.: G01K 1/14, G01K 13/02, G01N 27/407

(54) **Gasmessfühler**

(30) Priorität: 05.12.2002 DE 10256801
(71) Anmelder: ROBERT BOSCH GMBH, 70442 Stuttgart (DE)
(72) Erfinder: Weyl, Helmut, 71701 Schwieberdingen (DE); Wilde, Jürgen, 70736 Fellbach (DE)

(57) **Zusammenfassung**

Es wird ein Gasmessfühler (10) vorgeschlagen, der der Bestimmung einer Eigenschaft eines Messgases, vorzugsweise der Bestimmung der Temperatur oder der Konzentration einer Gaskomponente eines Abgases einer Brennkraftmaschine dient. Der Gasmessfühler (10) enthält ein Sensorelement (13), das ein von einem Schutzrohr (50) umgebenes Messelement (41) umfasst. Das Messgas kann innerhalb des Schutzrohres (50) durch einen durch die Geometrie des Schutzrohres (50) vorgegebenen Strömungsquerschnitt zu dem Messelement (41) strömen. Das Schutzrohr (50) ist derart gestaltet, dass die Stromdichte des Messgases im Bereich des Messelements (41) höher ist als die Stromdichte des Messgases bei Eintritt in das Schutzrohr (50). Durch die Gestaltung des Schutzrohres ist der Strömungsquerschnitt im Bereich des Messelements (41) geringer als der Strömungsquerschnitt in einem Bereich, der in Strömungsrichtung des Messgases vor und/oder hinter dem Messelement (41) liegt.

## Beschreibung

### Stand der Technik

Die Erfindung geht aus von einem Gasmessfühler nach dem Oberbegriff der unabhängigen Ansprüche.

Ein derartiger Gasmessfühler, der für den Einbau in ein Abgasrohr eines Verbrennungsmotors vorgesehen ist, ist beispielsweise in der DE 102 10 313 beschrieben. Der Gasmessfühler weist ein Gehäuse auf, in dem mittels einer Dichtanordnung ein Sensorelement abgedichtet und festgelegt ist. Das Sensorelement weist ein messgasseitiges Ende auf, mit dem es aus dem Gehäuse herausragt. An dem Gehäuse ist ein Schutzrohr festgelegt, das das messgasseitige Ende des Sensorelements umgibt. Der Gasmessfühler ist derart am Abgasrohr festgelegt, dass das messgasseitige Ende des Sensorelements und das Schutzrohr in das Abgasrohr hineinragt.

Das Schutzrohr ist zylindrisch geformt und auf der dem Gehäuse abgewandten Stirnseite geschlossen ausgeführt. Es ist als einwandiges Schutzrohr oder als sogenanntes Doppelschutzrohr mit zwei ineinanderliegenden rohrförmigen Abschnitten ausgebildet. Das Schutzrohr enthält Öffnungen, die den Zutritt des Messgases zum messgasseitigen Ende des Sensorelements erlauben. Die Öffnungen sind quadratisch oder rund geformt.

Bei derartigen Schutzrohren ist nachteilig, dass die Öffnungen nur eine vergleichsweise geringe Fläche des Schutzrohres einnehmen und eine geringe Stromdichte des Messgases im Bereich des Sensorelements bewirken. Die Stromdichte j des Messgases ist in üblicher Weise definiert durch j = ρ·v, wobei p die Dichte und v die Strömungsgeschwindigkeit des Messgases bezeichnet. Aufgrund der geringen Stromdichte wirken sich schnelle Änderungen der Parameter des Messgases nur verlangsamt auf das Messsignal des Sensorelements aus.

Bei Temperaturmessfühlern bewirkt der mit der geringen Stromdichte einhergehende geringe konvektiv ins Sensorelement eingetragene Wärmestrom, dass die Reaktion des Sensorelements auf schnelle Änderungen der Parameter des Messgases verlangsamt ist.

Zudem tritt in einem Schutzrohr nach dem Stand der Technik das Messgas ungleichmäßig durch die Messgasöffnungen in das Schutzrohr ein. Dadurch ist in bestimmten Bereichen des Sensorelements die Strömungsgeschwindigkeit und damit die Stromdichte des Messgases geringer als in anderen Bereichen des Sensorelements, wodurch sich die Dynamik des Sensorelements weiter verschlechtert.

### Vorteile der Erfindung

Der erfindungsgemäße Gasmessfühler mit den kennzeichnenden Merkmalen der unabhängigen Ansprüche hat demgegenüber den Vorteil, dass durch die Gestaltung des Schutzrohrs ein Messgas schnell, auf direktem Weg und ohne Strömungshindernisse zu einem Messelement, also dem sensitiven Bereich des Sensorelements, gelangen kann.

Das Schutzrohr ist so geformt, dass sich die Stromdichte des Messgases im Bereich eines Messelements des Sensorelements vergrößert. Durch die höhere Stromdichte verbessert sich die Dynamik des Sensorelements.

Durch die in den abhängigen Ansprüchen aufgeführten Maßnahmen sind vorteilhafte Weiterbildungen des in den unabhängigen Ansprüchen angegebenen Gasmessfühlers möglich.

Es ist vorteilhaft, wenn das Schutzrohr im Bereich einer Ebene, in der das Messelement liegt und die senkrecht zur Strömungsrichtung des Messgases liegt, eine Verengung aufweist. Durch diese Verengung wird vorteilhaft erreicht, dass der Strömungsquerschnitt für das in das Schutzrohr eintretende Messgas größer ist als für das das Messelement umströmende Messgas, so dass sich die Stromdichte des das Messelement umströmenden Messgases gegenüber der Stromdichte des in das Schutzrohr eintretenden Messgases oder der durchschnittlichen Stromdichte im Abgasrohr erhöht. Bei einer vorteilhaften Ausführung der Erfindung ist das Schutzrohr so gestaltet, dass der Strömungsquerschnitt auf Höhe des Messelements am geringsten ist.

Das Sensorelement weist senkrecht zu seiner Längsachse einen rechteckigen Querschnitt mit einer längeren Seite und einer kürzeren Seite auf. Die kürzere Seite des Sensorelements ist vorteilhaft senkrecht zur Strömungsrichtung des Messgases angeordnet, so dass die kürzere Seite des Sensorelements von dem Messgas angeströmt wird. Dies hat den Vorteil, dass zum einen das Sensorelement für das Messgas einen geringeren Widerstand darstellt, und dass zum anderen die Biegebelastung des Sensorelements durch das anströmende Messgas und damit die Bruchgefahr vermindert wird.

Vorteilhaft weist das Schutzrohr zwei gegenüberliegende Messgasöffnungen auf, wobei die beiden Messgasöffnungen in Strömungsrichtung, also in Richtung der Längsachse des Abgasrohres, vor beziehungsweise hinter dem Messelement angeordnet sind. Das Messgas kann in dieser Anordnung zum Messelement gelangen, ohne stark umgelenkt, abgebremst oder verwirbelt zu werden.

Vorteilhaft weist mindestens eine Messgasöffnung mindestens einen Steg auf. Durch den Steg wird das Schutzrohr stabilisiert und verhindert, dass bei Bruch des Sensorelements Teile des Sensorelements aus dem Schutzrohr herausfliegen können. Bei einem Steg, der parallel zur Längsachse des Sensorelements verläuft und der in Strömungsrichtung vor dem Sensorelement angeordnet wird, wird zudem verhindert, dass das Messgas direkt die kürzere Seite des Sensorelements anströmen kann. Die Stege sind so dünn gestaltet, dass der Zutritt des Messgases in das Schutzrohr und insbesondere zu der längeren Seite des Sensorelements nicht wesentlich behindert wird, so dass das das Messgas weitgehend schnell, auf direktem Weg und ohne wesentliche Strömungshindernisse zum Messelement gelangen kann.

Vorteilhaft ist im Bereich der Verengungen des Schutzrohres mindestens ein Schlitz vorgesehen, der parallel zur Längsachse des Sensorelements ausgerichtet ist. Durch die Schlitze können fertigungstechnisch bedingte Spannungen im Schutzrohr verringert werden. Die Schlitze sind so schmal ausgestaltet, dass das Strömungsverhalten des Messgases durch die Schlitze nur unwesentlich verändert wird.

### Zeichnung

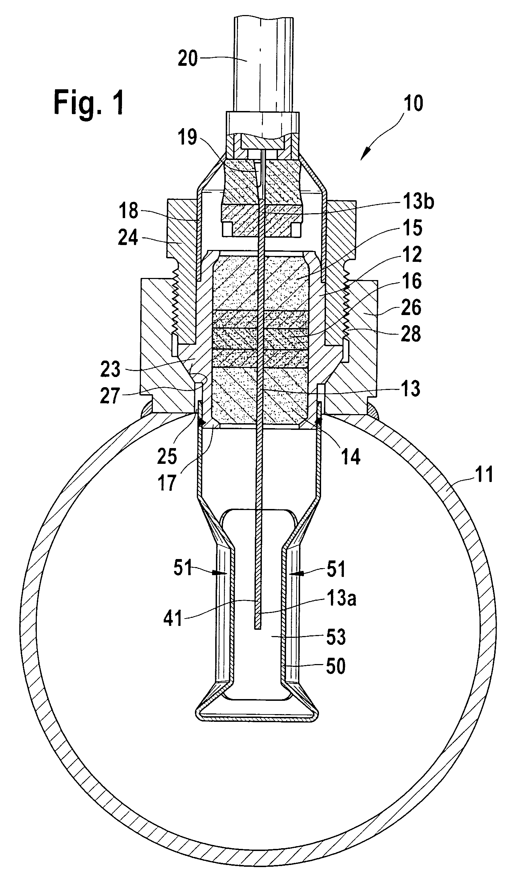

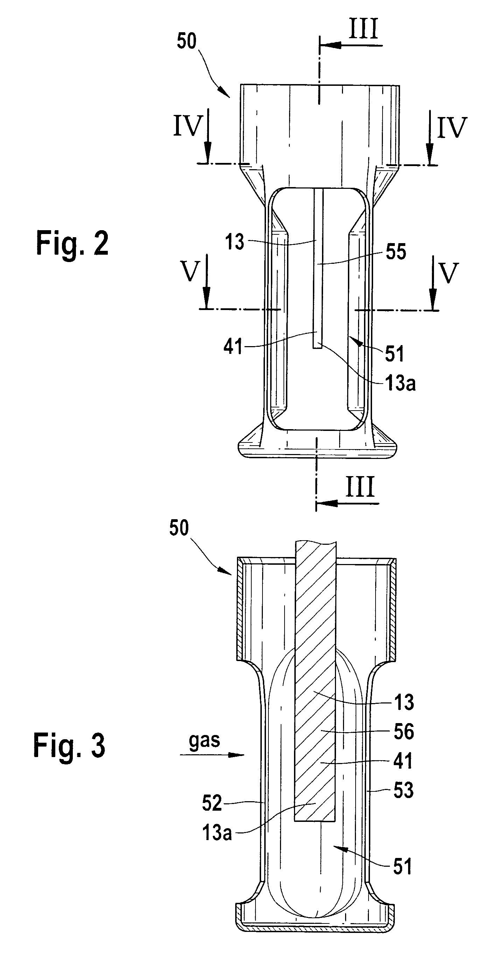

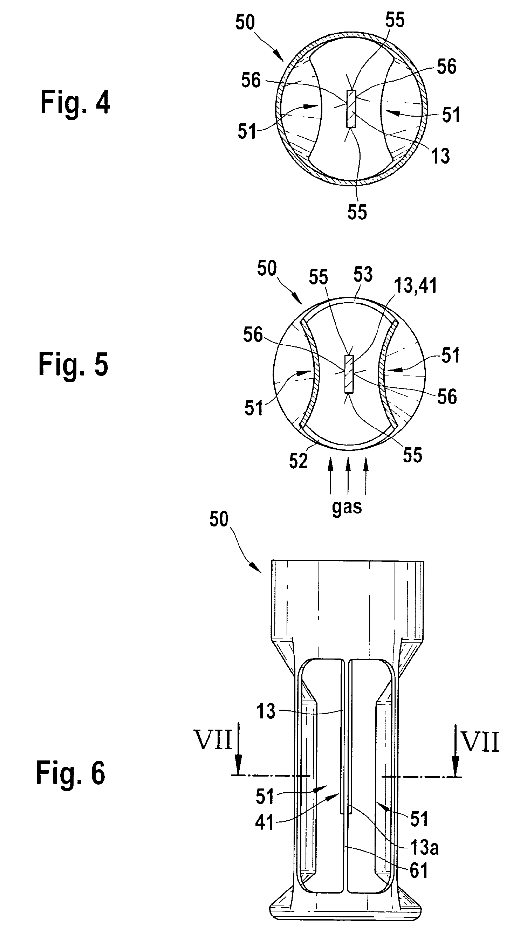

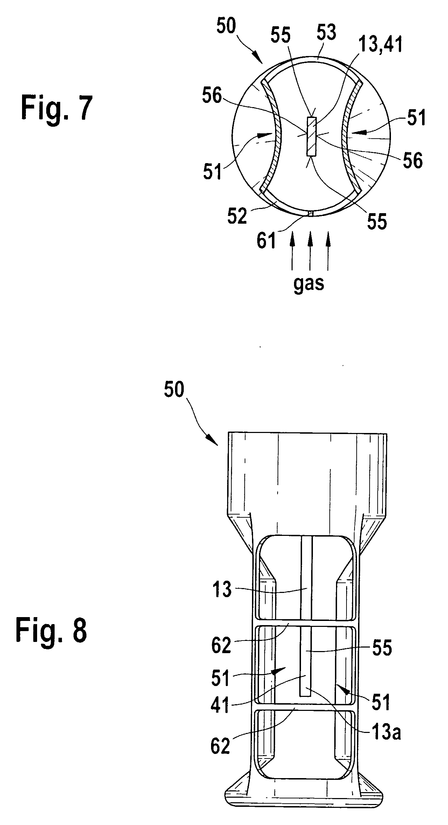

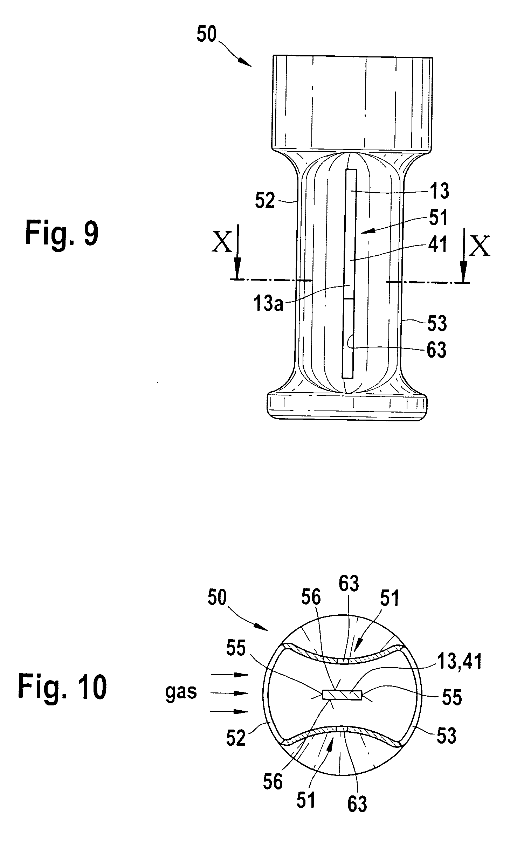

Ausführungsbeispiele der Erfindung sind in der Zeichnung dargestellt und in der nachfolgenden Beschreibung näher erläutert. Es zeigen Figur 1 als erstes Ausführungsbeispiel der Erfindung einen in ein Abgasrohr eingebauten Gasmessfühler in einer Schnittdarstellung, Figur 2 bis 5 ein Schutzrohr und einen Teilbereich eines Sensorelements des Gasmessfühlers gemäß dem ersten Ausführungsbeispiel der Erfindung, wobei Figur 2 eine Aufsicht auf das Schutzrohr, Figur 3 eine Schnittdarstellung des Schutzrohres gemäß der Linie III - III in Figur 2, Figur 4 eine Schnittdarstellung des Schutzrohres gemäß der Linie IV - IV in Figur 2 und Figur 5 eine Schnittdarstellung des Schutzrohres gemäß der Linie V - V in Figur 2 zeigt. Es zeigen weiterhin Figur 6 als zweites Ausführungsbeispiel der Erfindung ein Schutzrohr und einen Teilbereich eines Sensorelements in Aufsicht, Figur 7 eine Schnittdarstellung des Schutzrohres gemäß der Linie VII - VII in Figur 6, Figur 8 als drittes Ausführungsbeispiel der Erfindung ein Schutzrohr und einen Teilbereich eines Sensorelements in Aufsicht, Figur 9 als viertes Ausführungsbeispiel der Erfindung ein Schutzrohr und einen Teilbereich eines Sensorelements in Aufsicht und Figur 10 eine Schnittdarstellung des Schutzrohres gemäß der Linie X - X in Figur 9.

### Beschreibung der Ausführungsbeispiele

Die in Figur 1 dargestellte Messfühleranordnung zeigt einen Gasmessfühler 10 zur Bestimmung eines Parameters eines Messgases und eine im Querschnitt darstellte Messgasleitung 11, die von dem Messgas durchströmt wird. Im Beispiel der Figur 1 ist der Gasmessfühler 10 ein Temperatursensor zur Bestimmung der Temperatur eines Abgases einer Brennkraftmaschine und die Messgasleitung 11 ein von einem oder mehreren Verbrennungszylindern der Brennkraftmaschine abgehendes Abgasrohr.

Der Gasmessfühler 10 weist ein Sensorelement 13 auf, das in einem Gehäuse 12 aufgenommen ist und aus diesem mit einem messgasseitigen Abschnitt 13a und einem anschlussseitigen Abschnitt 13b herausragt. Das Sensorelement 13 wird dabei von einem elektrisch isolierenden, messgasseitigen Keramikeinsatz 14, einem elektrisch isolierenden, anschlussseitigen Keramikeinsatz 15 und einer dazwischenliegenden, paketartigen Dichtung 16 umfasst, die sich ihrerseits an der Innenwand des Gehäuse 12 abstützt. Der messgasseitige Keramikeinsatz 14 liegt auf einem Absatz 17 an der Gehäuseinnenwand auf, und der obere Gehäuserand ist auf den anschlussseitigen Keramikeinsatz 15 aufgebördelt. Die paketartige Dichtung 16 kann - wie dargestellt - aus drei aufeinanderliegenden Dichtungselementen bestehen, wobei die beiden äußeren beispielsweise aus Steatit und das mittlere aus Bornitrid gefertigt ist. Die paketartige Dichtung kann aber auch nur ein Dichtungselement aus Steatit aufweisen. Auf das Gehäuse 12 ist eine Metallhülse 18 aufgesetzt, die einen den anschlussseitigen Abschnitt 13b des Sensorelements 13 und eine Anschlusslitze 20 kontaktierenden, elektrischen Klemmverbinder 19 umschließt.

Zur Montage des Gasmessfühlers 10 an der Messgasleitung 11 ist das Gehäuse 12 mit einem au der Unterseite abgeschrägten Radialflansch 23 versehen und eine mit dem Radialflansch 23 zusammenwirkende Hohlschraube 24 vorgehalten. Die Messgasleitung 11 weist eine Gasmessfühler-Einführöffnung 25 und eine die Gasmessfühler-Einführöffnung 25 umschließende Aufnahme 26 für das Gehäuse 12 des Gasmessfühlers 10 auf. Die Aufnahme 26 weist eine abgeschrägte Abstützschulter 27 für den Radialflansch 23 des Gehäuses 12 und ein Innengewinde 28 auf, das mit dem Außengewinde der Hohlschraube 24 korrespondiert.

An dem von der Metallhülse 18 abgekehrten Ende des Gehäuses 12 ist ein Schutzrohr 50 festgelegt. Das Schutzrohr 50 ist in Figur 1 schematisch und in den Figuren 2 bis 5 detaillierter dargestellt.

Das Schutzrohr 50 weist eine erste Messgasöffnung 52 und eine zweite Messgasöffnung 53 auf. Die erste Messgasöffnung 52 ist in Strömungsrichtung des Messgases vor dem Messelement 41, die zweite Messgasöffnung 53 in Strömungsrichtung hinter dem Messelement 41 angeordnet. Die Strömungsrichtung des Messgases ist in Figur 3 und 5 durch einen Pfeil mit der Kennzeichnung "gas" dargestellt.

Das Schutzrohr 50 weist zwei gegenüberliegende Verengungen 51 auf, durch die der Querschnitt des Schutzrohres 50 bezüglich der Strömung des Messgases von der ersten Messgasöffnung 52 hin zum Sensorelement 13 beziehungsweise zum Messelement 41 abnimmt und zur zweiten Messgasöffnung 53 hin wieder zunimmt. Durch die Verringerung des Querschnitts verringert sich auch der Strömungsquerschnitt für das Messgas. Bei einer Verringerung des Strömungsquerschnitts erhöht sich die Stromdichte des Messgases, also das Produkt aus Dichte und Strömungsgeschwindigkeit. Unter dem Strömungsquerschnitt wird der innerhalb des Schutzrohres liegende Querschnitt senkrecht zur Strömungsrichtung verstanden. Da der Querschnitt des Schutzrohres auf Höhe des Messelements minimal ist, liegt im Bereich des Messelements 41 eine hohe Stromdichte des Messgases vor.

Das Schutzrohr 50 ist so gestaltet, dass durch die erste Messgasöffnung 52 mit einem großen Querschnitt Messgas in das Schutzrohr 50 aufgenommen wird (Sammelfunktion) und durch die Verengung 51 die Stromdichte des Messgases im Bereich des Messelements 41 vergrößert wird, so dass der Wärmeübergang auf das Messelement 41 verbessert ist (Wärmetauschfunktion).

Die Messgasöffnungen 52, 53 werden durch Stanzen, die Verengungen 51 durch Umformen in das Schutzrohr 50 eingebracht.

Das Sensorelement 13 weist senkrecht zu seiner Längsrichtung einen rechteckigen Querschnitt mit kürzeren Seiten 55 und längeren Seiten 56 auf. Das Sensorelement 13 ist so in der Messgasleitung 11 angeordnet, dass das Messgas auf eine der kürzeren Seiten 55 anströmt. Die längeren Seiten 56 sind also parallel zur Strömungsrichtung des Messgases ausgerichtet.

Als Material für das Schutzrohr 50 hat sich 2.4633 (NiCr26FeAlY) als geeignet erwiesen. Alternativ kommt beispielsweise auch 2.4854 (NiFe33Cr25Co) oder 1.4845 (X8CrNi25-21) in Betracht.

Die erste und zweite Messgasöffnung 52, 53 erstreckt sich nahezu über die ganze Länge des Schutzrohres 50. Die Messgasöffnungen können jedoch auch kleiner ausgestaltet sein und sich beispielsweise nur in einer Fläche ausdehnen, die in Strömungsrichtung vor und hinter dem Messelement des Sensorelements liegt. In einer alternativen Ausführung der Erfindung (nicht dargestellt) kann das Schutzrohr auch mehr als zwei Messgasöffnungen aufweisen. Die erste und zweite Messgasöffnung 52, 53 des Schutzrohres 50 gemäß der Figuren kann alternativ beispielsweise durch Stanzstege untergliedert sein. Die Verengungen 51 des Schutzrohres 50 kann alternativ zu der runden Ausführung gemäß Figur 4 und Figur 5 auch eckig ausgeführt sein, wobei die Ecken derart in das Schutzrohr eingebrachte sind, dass in der Verbindungslinie der beiden Ecken der Verengungen das Messelement des Sensorelements liegt.

Ausführungsbeispiele für einige der genannten alternativen Ausführungen sind in den Figuren 6 bis 10 dargestellt. Die Figuren 6 bis 10 zeigen ein Schutzrohr 50 und den in dem Schutzrohr 50 angeordneten Teilabschnitt eines Sensorelements 13. Einander entsprechende Elemente wurden mit den gleichen Bezugszeichen wie in den Figuren 1 bis 5 bezeichnet. Schutzrohr 50 und Sensorelement 13 der Figuren 6 bis 10 sind wie das Schutzrohr 50 und das Sensorelement 13 in Figur 1 im Gasmessfühler 10 angeordnet.

Das Schutzrohr 50 gemäß Figur 6 und 7 (zweites Ausführungsbeispiel der Erfindung) unterscheidet sich von dem Schutzrohr 50 des ersten Ausführungsbeispiels dadurch, dass parallel zur Längsrichtung des Sensorelements 13 und in Strömungsrichtung des Abgases vor dem Sensorelement 13 ein Steg 61 vorgesehen ist, der sich über die gesamte erste Messgasöffnung 52 erstreckt und damit die erste Messgasöffnung 52 in zwei Teilabschnitte unterteilt. Die Breite des Steges 61 ist kleiner als die Breite der kürzeren Seite 55 des Sensorelements 13. Der Steg 61 dient der Stabilisierung und verhindert, dass das Messgas direkt auf die kürzere Seite 55 des Sensorelements 13 auftrifft. Der Steg 61 ist jedoch so schmal ausgestaltet, dass das Messgas weitgehend ungehindert seitlich am Messelement 41 des Sensorelements 13 vorbeiströmen kann. Der Strömungsquerschnitt im Bereich der ersten Messgasöffnung 52 wird durch den Steg 61 nur unwesentlich vermindert.

Bei dem zweiten Ausführungsbeispiel ist der Steg 61 nur bei der ersten Messgasöffnung 52 vorgesehen. In einer nicht dargestellten alternativen Ausführungsform kann auch die zweite Messgasöffnung 53 einen Steg aufweisen.

Das Schutzrohr 50 gemäß Figur 8 (drittes Ausführungsbeispiel der Erfindung) unterscheidet sich von dem Schutzrohr 50 des ersten Ausführungsbeispiels dadurch, dass die erste und die zweite Messgasöffnung 52, 53 durch jeweils zwei Stege 62 untergliedert wird. Die Stege 62 verlaufen in einer Ebene senkrecht zur Längsachse des Sensorelements 13. Durch die Stege 62 wird die erste beziehungsweise die zweite Messgasöffnung 52, 53 in jeweils drei Teilabschnitte unterteilt. Die Stege 62 sind derart gestaltet, dass im Falle eines Bruchs des Sensorelements 13 ein Herausfallen des abgebrochenen Teilabschnitt des Sensorelements 13 aus dem Schutzrohr 50 durch die Stege 62 verhindert oder zumindest erschwert wird. Die Stege 62 sind schmal ausgestaltet und vermindern den Strömungsquerschnitt im Bereich der ersten und zweiten Messgasöffnung 52, 53 nur unwesentlich.

Die Gestaltung des Schutzrohres beim zweiten und dritten Ausführungsbeispiel können selbstverständlich kombiniert werden, so dass die Messgasöffnungen 52, 53 sowohl Stege 61 parallel zur Längsachse des Sensorelements 13 als auch Stege 62 in einer Ebene senkrecht zur Längsachse des Sensorelements 13 aufweisen.

Das Schutzrohr 50 gemäß Figur 9 und 10 (viertes Ausführungsbeispiel der Erfindung) unterscheidet sich von dem Schutzrohr 50 des ersten Ausführungsbeispiels dadurch, dass das Schutzrohr 50 im Bereich der Verengungen 51 jeweils ein Schlitz 63 aufweist, der parallel zur Längsachse des Sensorelements 13 ausgerichtet ist. Die Schlitze 63 können notwendig werden, wenn beim Fertigungsvorgang des Schutzrohres 50 Risse auftreten. Durch die Schlitze 63 können fertigungstechnisch bedingte Spannungen verringert werden. Die Schlitze 63 sind so schmal ausgestaltet, dass das Strömungsverhalten des Messgases durch die Schlitze 63 nur unwesentlich verändert wird. Damit verändert sich auch Stromdichte des an dem Messelement 41 des Sensorelements 13 vorbeiströmenden Messgases im Bereich der Schlitze 63 nur unwesentlich. Das Messgas strömt zum weitaus überwiegenden Teil zwischen Sensorelement 13 und Verengung 51 hin zur zweiten Messgasöffnung 53. Aufgrund der Gestaltung der Verengung 51 wird nur ein kleiner Teil des Messgases das Schutzrohr 50 durch die Schlitze 63 verlassen oder durch die Schlitze 63 in das Schutzrohr 50 eintreten. Daher wird durch das Einbringen der Schlitze 63 die Stromdichte des Messgases im Bereich des Messelements 41, also in dem für den Wärmeübertrag relevanten Bereich, nur geringfügig vermindert.

Die Maßnahmen des ersten bis vierten Ausführungsbeispiels können selbstverständlich beliebig kombiniert werden.

## Patentansprüche

1. Gasmessfühler (10) zur Bestimmung einer Eigenschaft eines Messgases, vorzugsweise zur Bestimmung der Temperatur oder der Konzentration einer Gaskomponente eines Abgases einer Brennkraftmaschine, mit einem Sensorelement (13), das ein von einem Schutzrohr (50) umgebenes Messelement (41) umfasst, wobei das Messgas innerhalb des Schutzrohres (50) durch einen durch die Geometrie des Schutzrohres (50) vorgegebenen Strömungsquerschnitt zu dem Messelement (41) strömen kann, **dadurch gekennzeichnet, dass** der Strömungsquerschnitt im Bereich des Messelements (41) geringer ist als der Strömungsquerschnitt in einem Bereich, der in Strömungsrichtung des Messgases vor und/oder hinter dem Messelement (41) liegt.

2. Gasmessfühler (10) zur Bestimmung einer Eigenschaft eines Messgases, vorzugsweise zur Bestimmung der Temperatur oder der Konzentration einer Gaskomponente eines Abgases einer Brennkraftmaschine, insbesondere nach Anspruch 1, mit einem Sensorelement (13), das ein von einem Schutzrohr (50) umgebenes Messelement (41) umfasst, wobei das Messgas zu dem Messelement (41) strömen kann, **dadurch gekennzeichnet, dass** das Schutzrohr (50) derart gestaltet ist, dass die Stromdichte des Messgases im Bereich des Messelements (41) höher ist als die Stromdichte des Messgases bei Eintritt in das Schutzrohr (50) und/oder beim Austritt aus dem Schutzrohr (50).

3. Gasmessfühler (10) zur Bestimmung einer Eigenschaft eines Messgases, vorzugsweise zur Bestimmung der Temperatur oder der Konzentration einer Gaskomponente eines Abgases einer Brennkraftmaschine, insbesondere nach Anspruch 1 oder 2, mit einem Sensorelement (13), das ein von einem Schutzrohr (50) umgebenes Messelement (41) umfasst, wobei das Messgas innerhalb des Schutzrohres (50) durch einen durch die Geometrie des Schutzrohres (50) vorgegebenen Strömungsquerschnitt zu dem Messelement (41) strömen kann, **dadurch gekennzeichnet, dass** der Strömungsquerschnitt für das Messgas, das beim Umströmen des Messelements (41) einen wesentlichen Einfluss auf ein Messergebnis des Messelements (41) hat, im Bereich des Messelements (41) geringer ist als in einem Bereich, der bezogen auf die Strömungsrichtung des Messgases vor und/oder hinter dem Messelement (41) liegt.

4. Gasmessfühler nach einem der vorhergehenden Ansprüche, **dadurch gekennzeichnet, dass** das Schutzrohr (50) im Bereich des Messelements (41) eine Verengung (51) aufweist.

5. Gasmessfühler nach einem der vorhergehenden Ansprüche, **dadurch gekennzeichnet, dass** der Strömungsquerschnitt für das in das Schutzrohr (50) eintretende Messgas größer ist als für das das Messelement (41) umströmende Messgas.

6. Gasmessfühler nach einem der vorhergehenden Ansprüche, **dadurch gekennzeichnet, dass** das Schutzrohr (50) derart gestaltet ist, dass der Strömungsquerschnitt auf Höhe des Messelements (41) am geringsten ist.

7. Gasmessfühler nach einem der vorhergehenden Ansprüche, **dadurch gekennzeichnet, dass** das Sensorelement (13) senkrecht zu seiner Längsachse einen rechteckigen Querschnitt mit einer längeren Seite (56) und einer kürzeren Seite (55) aufweist, und dass die kürzere Seite (55) des Sensorelements (13) senkrecht zur Strömungsrichtung des Messgases liegt.

8. Gasmessfühler nach einem der vorhergehenden Ansprüche, **dadurch gekennzeichnet, dass** das Schutzrohr (50) eine erste Messgasöffnung (52) und eine zweite Messgasöffnung (53) aufweist, und dass die erste und die zweite Messgasöffnung (52, 53) auf gegenüberliegenden Seiten des Schutzrohres (50) angeordnet ist.

9. Gasmessfühler nach Anspruch 8, **dadurch gekennzeichnet, dass** die erste Messgasöffnung (52) und/oder die zweite Messgasöffnung (53) durch mindestens einen Steg (61, 62) in zwei oder mehr Abschnitte unterteilt ist.

10. Gasmessfühler nach Anspruch 9, **dadurch gekennzeichnet, dass** der Steg (61) parallel zur Längsachse des Sensorelements verläuft, dass der Steg (61) in Strömungsrichtung vor dem Sensorelement (13) angeordnet ist, und dass die Breite des Steges (61) geringer ist als die Breite einer kürzeren Seite (55) des Sensorelements (13).

11. Gasmessfühler nach Anspruch 9 oder 10, **dadurch gekennzeichnet, dass** der Steg (62) in einer Ebene senkrecht zur Längsachse des Sensorelements (13) liegt, und dass die Breite des Steges (62) gegenüber den Abmessungen der Messgasöffnung (52, 53) klein ist.

12. Gasmessfühler nach einem der Ansprüche 8 bis 11, **dadurch gekennzeichnet, dass** die erste Messgasöffnung (52) in Strömungsrichtung des Messgases vor dem Messelement (41) und die zweite Messgasöffnung (53) in Strömungsrichtung des Messgases hinter dem Messelement (41) angeordnet ist.

13. Gasmessfühler nach einem der vorhergehenden Ansprüche, **dadurch gekennzeichnet, dass** zumindest in den in Strömungsrichtung vor und/oder hinter dem Messelement (41) liegenden Bereichen des Schutzrohres (50) eine Öffnung (52, 53) vorgesehen ist.

14. Gasmessfühler nach einem der Ansprüche 4 bis 13, **dadurch gekennzeichnet, dass** das Schutzrohr (50) im Bereich der Verengung (51) mindestens einen Schlitz (63) aufweist, wobei der Schlitz (63) in einer Richtung parallel zur Längsachse des Sensorelements (13) verläuft.
